# EUROPEAN PATENT APPLICATION

(11) **EP 1 746 570 A1**
(43) Date of publication of application: **24.01.2007**
(21) Application number: 06015044.8
(22) Date of filing: 19.07.2006
(51) Int. Cl.: G09G 5/00

(54) **Display unit**

(30) Priority: 22.07.2005 JP 2005212188
(71) Applicant: ORION ELECTRIC CO., Ltd., Takefu-City, Fukui 915-8555 (JP)
(72) Inventor: Ishida, Keishiro, Takefu-city Fukui 915-8555 (JP); Kuwashima, Kiichiro, Takefu-city Fukui 915-8555 (JP)
(74) Representative: Goddar, Heinz J.

(57) **Abstract**

An object of the invention is to provide a display unit capable of rendering an uneven luminance undistinguished by processing a display area alone where a burning phenomenon occurred without processing an entire screen. A main unit CPU (10) of an image display unit is provided with an image signal control part (100) for controlling luminance level of a display screen based on set date relating to light emission luminance which is set in a RAM (11), a processing area specifying part (101) for specifying a burning moderate area and a timer setting part (102) for controlling processing time. The processing area specifying part (101) specifies a processing area (S) in accordance with the operation of the remote controller so as to surround an area where the burning phenomenon occurred. The image signal control part (100) allows the fluorescent material to emit light at a luminance level which is set to be continuously lowered toward the peripheral portion of the processing area. Upper limit of light emission time is defined by the timer setting part (102).

## Description

### FIELD OF THE INVENTION

The invention relates to a display unit by allowing a fluorescent material such as a cathode ray tube (CRT), a plasma display panel (PDP), a filed effect discharge display (FED), and so forth to emit light, thereby displaying.

### BACKGROUND OF THE INVENTION

Although a TV receiver using a CRT has become widespread as a display unit for displaying image utilizing a principle of light emission of a fluorescent material, there has been particularly a thin type display unit using a PDP for allowing the fluorescent material to be excited to emit light by generating ultraviolet rays owing to discharge of rare gases such as neon (Ne) or xenon (Xe) in discharge cells which are disposed in a matrix shape.

According to a display unit utilizing a principle of light emission of a fluorescent material, there has been a problem in that if a static image having high luminance level is displayed for a long period of time, degradation of the fluorescent material in an area where the static image is displayed progresses rapidly, so that a difference in luminance occurs between the area where the static image is displayed and an area where the static image is not displayed, namely, a so-called burning phenomenon occurs.

Accordingly, in the case where the static image continues, a luminance level is forced to lower or the display position of the image is forced to move for every predetermined time so as not to render the luminance level high for a long period of time at the same position, thereby preventing the burning phenomenon of the fluorescent material from occurring. In addition to measures made in view of the prevention of the burning phenomenon, there is disclosed, for example, in JP 9-191465A that white display and so forth are made on an entire screen in advance to reduce uneven luminance even if the burning phenomenon would occur.

However, according to a burning prevention technology as set forth above, there causes a problem in that in the case where image is continuously displayed at a predetermined position like a display of watch and so forth, the image is difficult to be seen when the luminance level is lowered, while in the case where the display position is moved, one image display overlaps the other image display, so that the burning prevention has limitation. Further, if the burning processing is implemented in advance as disclosed in JP 9-191465A, the fluorescent material of the entire screen is degraded to be dark, causing a problem that a display function per se is lowered.

### SUMMARY OF THE INVENTION

It is therefore an object of the invention to provide a display unit capable of rendering an uneven luminance undistinguished by processing a display area alone where a burning phenomenon occurred without processing an entire screen.

The display unit of the invention comprises a display body for displaying image by light emission of a fluorescent material, a specification means for specifying a processing area in a display area of the display body, a light emission luminance control means for setting a light emission luminance at a central portion of the specified processing area to a level where a burning phenomenon of the fluorescent material occurs, and continuously lowering the light emission luminance toward a peripheral portion of the processing area from the central portion thereof. Further, the display body is characterized in that it is a color display body for emitting and displaying three primary colors. Still further, the display unit is characterized in that it includes a confirmation screen display means for displaying any one of white, blue, and red color single screens.

With a configuration set forth above, the specification means specifies the processing area so as to surround the display area where a burning phenomenon occurred, so that light emission luminance at the central potion of the specified processing area is set to a level where the burning phenomenon of the fluorescent material occurs, and the level of the light luminance is continuously lowered toward the peripheral portion from the central portion of the processing area, thereby rendering the uneven luminance generated by the burning phenomenon undistinguished.

That is, since the level of the light emission luminance is continuously lowered toward the peripheral portion from the central portion of the processing area, the burning is applied to the fluorescent material at the processing area so as to give gradation while directing from the central portion to the peripheral portion. Accordingly, if the processing area is set so as to allow a portion where the uneven luminance generated by burning is distinguished to position at the central portion, boundary of the uneven luminance is rendered moderate in an indistinct state so that the uneven luminance becomes undistinguished.

Further, since only the display area where a burning phenomenon occurred is locally subjected to processing, uneven luminance can be rendered undistinguished without affecting other display areas.

Still further, in the case where the display body is formed of a color display body, assuming that a confirmation screen display means for displaying any one of white, blue or red simple screen is provided, it is possible to easily confirm either color is subjected to a burning phenomenon, thereby coping with the uneven luminance generated by the burning phenomenon at an early stage.

### BRIEF DESCRIPTION OF THE DRAWINGS

Fig. 1 is a block diagram of an entire configuration according to an embodiment of the invention;
Fig. 2 is a block diagram showing a configuration for implementing a moderate processing;
Fig. 3 is a graph showing luminescent level in a processing area;
Fig. 4A is a view showing a screen display in the case of specifying the processing area, and Fig. 4B is a view for explaining the disposition of operation keys of a remote controller; and
Fig. 5 is a flow of burning moderate processing.

### BEST MODE FOR CARRYING OUT THE INVENTION

An embodiment of the invention is described hereinafter with reference to the accompanying drawings. The embodiments described hereinafter being a preferred specific example, the same has various technical particularity, however, it is to be understood that the invention is not limited to any of the details of description, unless otherwise specified.

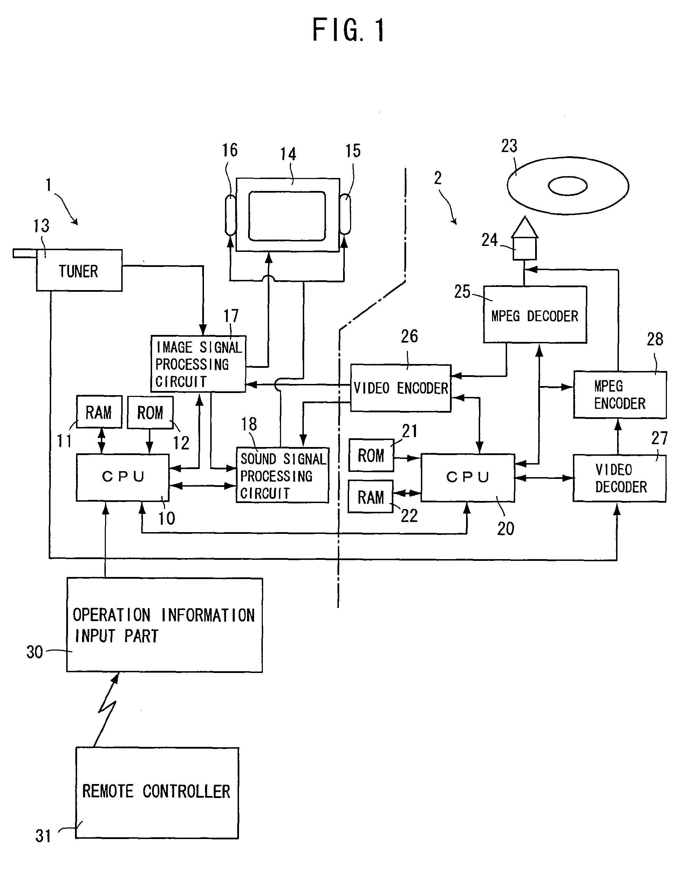

Fig. 1 is a block diagram of an entire configuration according to an embodiment of the invention.

An image display main unit 1 is provided with a main unit CPU 10 serving as a control part for implementing information processing for the entire configuration, a RAM 11 and a ROM 12 serving as a storage means, wherein the main unit CPU 10 reads out programs stored in the ROM 12, and various set data and so forth stored in the RAM 11 to effect control thereof.

The image display main unit 1 further includes a tuner 13 for receiving a TV signal from an external device, a monitor 14 for displaying image serving as a display part, left and right speakers 15, 16 built in the monitor 14. An output signal from the tuner 13 is processed at an image signal processing circuit 17, whereby an image signal is sent to the monitor 14 where it is subjected to a display control while a sound signal is sent to a sound signal processing circuit 18 where sound is outputted from the left and right speakers 15, 16. The image signal processing circuit 17 and the sound signal processing circuit 18 are subjected to an image display control and a sound output control in response to control signals from the main unit CPU 10.

The monitor 14 is a display body for displaying image by light emission of a fluorescent material, and comprises, e.g. a PDP. The monitor 14 can effect a color display by use of three colors of RGB.

When a viewer operates a remote controller 31, that operation information is received by an operation information input part 30, and is sent to the main unit CPU 10. There are disposed in the remote controller 31, various function keys, a menu selection key, movement keys for moving a cursor displayed on a screen and so forth in addition to a channel selection key

Since set data relating to brightness and contrast of a display screen are stored in the RAM 11, the main unit CPU 10 reads out the set data from the RAM 11, if necessary, and send it to the mage signal processing circuit 17 where the light emission luminance of the display screen is set. Then, the set data can be set to several stages depending on a degree of brightness. For example, in the case where the display screen is rendered dark based on an energy saving setting, set data in a stage corresponding thereto is inputted from the remote controller 31 and stored in the RAM 11, and the main unit CPU 10 reads out the changed set data from the RAM 11 which is sent to the 17 so that light emission luminance is lowered.

Meanwhile, a storage disc playback unit 2 is also provided in the image display main unit 1, and the storage disc playback unit 2 reproduces information stored in a plurality of storage discs such as a CD, a DVD and so forth. The storage disc playback unit 2 includes a CPU 20 for reproduction serving as a control part for implementing information processing relating to reproduction control, a ROM 21 for storing programs and so forth and a RAM 22 for storing set data and so forth. Data stored in a rotating disc 23 is read out by a rotation control unit, not shown, through a pickup 24, and the read out information is decoded by an MPEG decoder 25. Since the decoded information is digital information, it is analogized by a video encoder 26, and the analogized information is sent to the image signal processing circuit 17 and a sound signal processing circuit 18, then it is sent to the monitor 14 where it is displayed as image, and also sent to the left and right speakers 15, 16 where it is outputted as sound.

A video decoder 27 at the side of the storage disc playback unit 2 is connected to the tuner 13 and the analog signal received by the tuner 13 is converted into the digital signal, then it is compressed by the MPEG encoder 28, and the compressed digital signal can be processed and stored in the disc 23 through the pickup 24.

With the image display unit as set forth above, since a fluorescent material emits light and displays it on the monitor 14, if the static image is displayed for a long period of time, the degradation of the fluorescent material in the display area advances compared with that in the peripheral portion, so that uneven luminance is generated. For example, if time display is displayed at a corner of the screen, the same display state continues for a long period of time, so that if the time display disappears, the portion where the time display disappears becomes darkish to generate uneven luminance. In the case where such a burning phenomenon occurred, it is preferable to suppress the influence exerted upon the image display to the most by rendering the uneven luminance undistinguished. Accordingly, the following burning moderation processing, described later, is implemented according to the present embodiment.

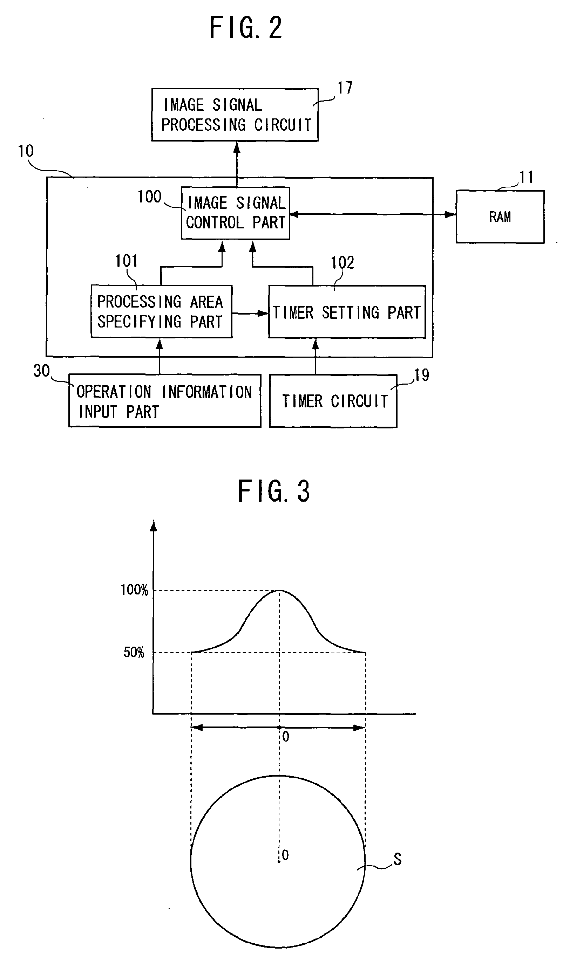

Fig. 2 is a block diagram showing a configuration of implementing moderate processing. The main unit CPU 10 is provided with an image signal control part 100 for controlling luminance level of a display screen based on set date relating to light emission luminance which is set in the RAM 11, a processing area specifying part 101 for specifying a burning moderate area and a timer setting part 102 for controlling processing time.

The image signal control part 100 controls the luminescence level in the processing area based on the set position data of the processing area which is imputed from the processing area specifying part 101. The control of the luminescence level is, for example, set as shown in a graph of Fig. 3. In the graph of Fig. 3, a vertical axis shows a luminescence level and a lateral axis shows a distance from the center O of the processing area. A processing area S is formed circular (shown under the graph) and the luminescence level is assumed to be 100% at the center O of the processing area S. Provided that the luminescence level is set to 100%, a burning phenomenon occurs at the fluorescent material positioned at the center in a very short period of time. The luminescence level is set to be continuously lowered as the fluorescent material is away from the center, and the luminance level at the peripheral portion is set to 50%. If the luminescence level is set as such, a darkish condition caused by the burning phenomenon is gradually thinned as the fluorescent material is away from the center toward the peripheral portion of the processing area so that the fluorescent material is subjected to burning like a gradation. Accordingly, the uneven luminescence generated by burning phenomenon which has been already occurred in the processing area is moderated to a blur state at a boundary because it overlaps with the gradation, so that it is undistinguished. Meanwhile, it is preferable to find the luminescence level from the distance date from the central portion of the processing area S by setting an appropriate formula (linear expression) in advance so as to continuously vary the lowering of the luminescence level from the central portion of the processing area S toward the peripheral portion.

Further, the image signal control part 100 effects control in the manner to display a confirmation screen on the monitor 14 so as to confirm the area where the burning phenomenon occurred when the burning moderate processing is selected by the remote controller 31. As the confirmation screen, there are white luster in which the entire screen is displayed in a white single screen, a blue luster in which the entire screen is displayed in a blue single screen, and are red luster in which the entire screen is displayed in a red single screen, and the display screen of each single color is sequentially displayed in accordance with the selection by a viewer.

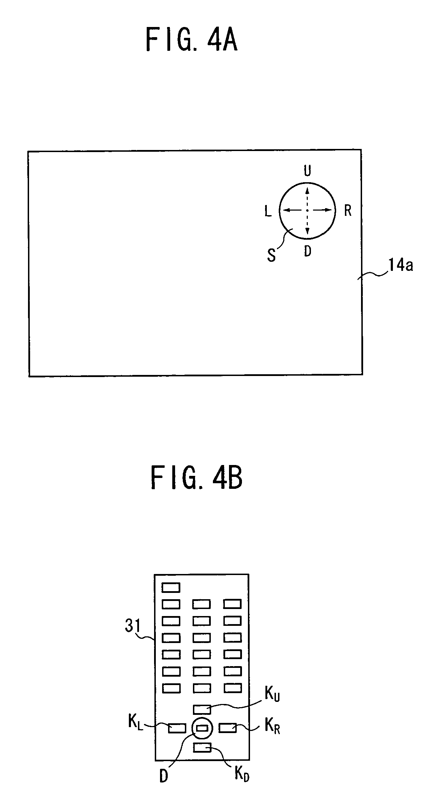

The processing area specifying part 101 specifies an area where the burning moderate processing is implemented on the display screen in accordance with the operation of the remote controller by the viewer. As shown in Fig. 4A, the processing area S is displayed on the screen 14a in a circular shape. When the burning moderate processing is selected by the remote controller 31, the processing area specifying part 101 displays the initialized reference circle on the central portion of the screen 14a.

The central portion of the reference circle is moved by appropriately operating cursor movement keys K_{R}, K_{L}, K_{U} and K_{D} (see Fig. 4B) of the remote controller 31, so as to position the reference circle at the central portion of the display area where the burning phenomenon occurred. The cursor movement key K_{R} moves the reference circle rightward, and the cursor movement key K_{L} moves the reference circle leftward, while the cursor movement key K_{U} moves the reference circle upward, and the cursor movement key K_{D} moves the reference circle downward. When a decision key D is operation after the reference circle is moved, the central position of the reference circle is decided. Subsequently, the cursor movement keys are operated again so as to enlarge or contract the scope of reference circle. That is, the cursor movement key K_{R} is operated in the case where the reference circle is enlarged rightward, and the cursor movement key K_{L} is operated in the case where the reference circle is enlarged leftward, while the cursor movement key K_{U} is operated in the case where the reference circle is enlarged upward, and the cursor movement key K_{D} is operated in the case where the reference circle is enlarged downward. In such a manner, when the processing area S is set by enlarging the reference circle so as to surround the display area where the burning phenomenon occurred, the decision key is again operated to identify the processing area S.

The timer setting part 102 counts a clock signal from the timer circuit 19, and outputs a count-up signal to the image signal control part 100 upon elapse of a predetermined set time. The viewer confirms the state of burning moderate processing to render the uneven luminance undistinguished, while the image signal control part 100 implements the burning moderate processing, thereafter the viewer operates the remote controller 31 to stop the processing. However, if the burning moderate processing is implemented more than needs, the fluorescent material is degraded excessively, so that a predetermined upper limit time (e.g. 10 minutes) is set, and when the timer setting part 102 counts the upper limit time, it outputs a count up signal to automatically stop the burning moderate processing.

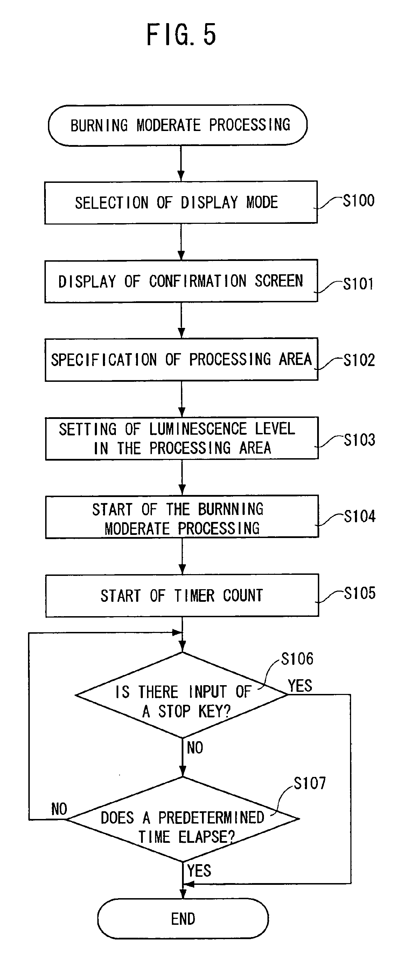

Fig. 5 shows a flowchart relating to the burning moderate processing. When the burning moderate processing is selected by the remote controller 31, the white single screen of white luster is first displayed. Then, when the selection key is operated, the blur luster and the red luster are sequentially displayed, whereby the viewer confirms as to which single color screen, the burning phenomenon occurred, and selectively displays the single color screen where the burning phenomenon occurred (S100, S101). If the single color screen is selected, the reference circle is displayed at the central portion thereof, so that the processing area specification processing as mentioned above is implemented (S102). That is, the viewer moves the reference circle to the central portion of the display area where the burning phenomenon occurred by appropriately operating cursor movement keys K_{R}, K_{L}, K_{U} and K_{D} (see Fig. 4(B)), then specifies the processing area by enlarging the reference circle so as to surround the area.

When the processing area is specified, a positional data for defining a scope of the processing area is inputted to the image signal control part 100 so that the luminescence level in the processing area is set (S103). The luminescence level in each position is calculated based on distance data from the central portion of the processing area in accordance with a preset mathematical expression so that the luminance level is set to be continuously lowered toward the peripheral portion. When the luminance level is once set, the fluorescent material in the processing area emits light in accordance with luminance level data, thereby starting the burning moderate processing (S104). At the same time, timer count is started at the timer setting part 102 (S105). Thereafter, it is checked as to whether the operation of the stop key is effected or not by the remote controller 31 (S106), and if the operation of the stop key is effected, the processing ends. On the other hand, if the operation of the stop key is not effected, it is decided as to whether the timer counted a predetermined time (S107), and if the timer counted the predetermined time, the processing ends, while if the timer did not count the predetermined time, the program returns to the step S106.

As mentioned above, since the inside of the processing area is subjected to burning moderate processing by specifying the processing area so as to surround the display area in the case where the uneven luminance is generated, the uneven luminance is undistinguished, and influence such as degradation does not exert upon the fluorescent material at the display area other than the processing area.

## Claims

1. A display unit comprises:
a display body (14) for displaying image by light emission of a fluorescent material;
a specification means (101) for specifying a processing area (S) in a display area of the display body; and
a light emission luminance control means (100) for setting a light emission luminance at a central portion of the specified processing area (S) to a level where a burning phenomenon of the fluorescent material occurs, and continuously lowering the light emission luminance toward a peripheral portion of the processing area from the central portion thereof.

2. A display unit according to Claim 1, wherein the display body (14) is a color display body for emitting and displaying three primary colors.

3. A display unit according to Claim 2, further including a confirmation screen display means (100) for displaying any one of white, blue, and red color single screens.
